# FASCICULE DE BREVET EUROPEEN

(11) **EP 4 065 434 B1**
(45) Date de publication et mention de la délivrance du brevet: **10.04.2024**
(21) Numéro de dépôt: 20811667.3
(22) Date de dépôt: 29.11.2020
(51) Int. Cl.: B60S 1/38

(54) **CONNECTEUR DE BALAI D'ESSUYAGE**
WISCHERBLATTVERBINDER
WIPER BLADE CONNECTOR

(30) Priorité: 29.11.2019 FR 1913450
(43) Date de publication de la demande: 05.10.2022
(73) Titulaire: Valeo Systèmes d'Essuyage, 78322 Le Mesnil Saint Denis (FR)
(72) Inventeur: GAUCHER, Vincent, 78322 LE MESNIL SAINT DENIS (FR); HOUSSAT, Stéphane, 78322 LE MESNIL SAINT DENIS (FR)
(74) Mandataire: Valeo Visibility
(86) Numéro de dépôt international: PCT/EP2020/083817
(87) Numéro de publication internationale: WO 2021/105492

(56) Documents cités:
- EP-A1- 3 208 160
- DE-A1- 10 340 140

## Description

### Domaine Technique de l'invention

La présente invention concerne le domaine de l'essuyage, et plus particulièrement le domaine des systèmes d'essuyage dédiés aux véhicules automobiles. Elle porte sur un connecteur d'un système d'essuyage, et sur un balai d'essuyage et un système d'essuyage comprenant un tel connecteur.

### Etat de la technique antérieure

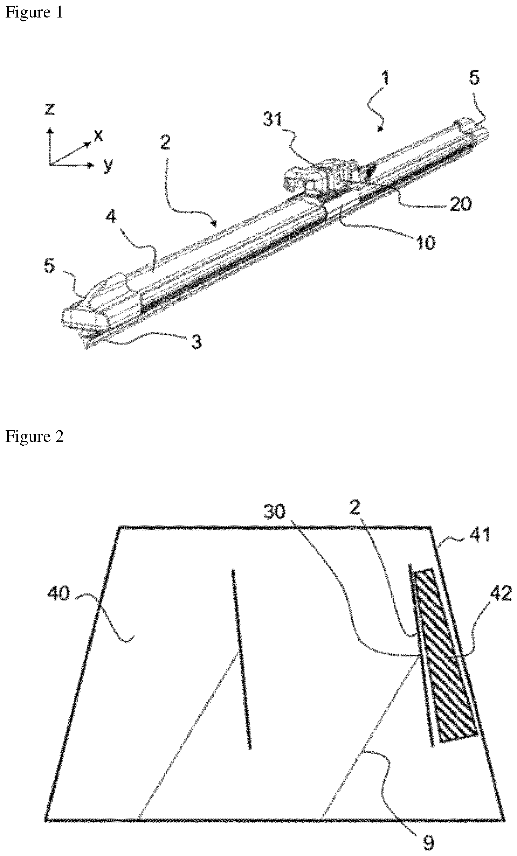

Les véhicules automobiles sont couramment équipés d'un système d'essuyage comprenant au moins un balai d'essuyage d'une surface vitrée, telle que par exemple un pare-brise. Un balai d'essuyage est entraîné, via un bras, par un moteur d'entraînement entre deux positions extrêmes. La première position extrême d'un balai d'essuyage peut correspondre à une position du balai d'essuyage sensiblement horizontale sur le pare-brise, c'est-à-dire le long du capot ; cette première position extrême sera dénommée par convention « position basse ». La deuxième position extrême peut correspondre à une position sensiblement verticale du balai d'essuyage sur le pare-brise, le long d'un montant porteur de ce pare-brise ; cette deuxième position extrême sera dénommée par convention « position haute », comme illustré par le système d'essuyage sur la droite sur la figure 2 qui sera décrite plus en détail par la suite. Lors de son mouvement entre ces deux positions extrêmes, le balai d'essuyage est configuré pour évacuer l'eau, du produit lave vitre et/ou des salissures présents sur le pare-brise et qui peuvent gêner la visibilité du conducteur.

Lorsqu'un système d'essuyage est mis en fonctionnement entre les deux positions extrêmes décrites ci-dessus, il alterne entre une phase ascendante au cours de laquelle le balai d'essuyage passe de sa position basse à sa position haute et une phase descendante au cours de laquelle il passe de sa position haute à sa position basse.

Lorsqu'un système d'essuyage se trouve en position haute décrite précédemment, il a essuyé le pare-brise et chassé les liquides et salissures qui s'y trouvaient, formant une zone d'accumulation de liquides sur la surface latérale du pare-brise comprise entre le montant et le balai d'essuyage. On constate en pratique au début d'une phase descendante un phénomène d'aspiration desdits liquides accumulés latéralement sur le pare-brise. Ce phénomène d'aspiration est néfaste car il tend à ramener le liquide dans le champ de vision du conducteur, ce qui peut réduire la visibilité de ce dernier et finalement devenir un phénomène dangereux.

Un exemple de balai d'essuyage visant à réduire ce phénomène d'aspiration est décrit dans le document DE10340140 A1.

### Présentation de l'invention

La présente invention a pour but de proposer une solution d'essuyage capable de limiter, voire d'annihiler, le phénomène d'aspiration explicité ci-dessus.

### Résumé de l'invention

A cet effet, l'invention porte sur un connecteur pour un système d'essuyage, en particulier pour véhicule automobile, comprenant un corps de connecteur de forme allongée et configurée pour être monté sur un balai d'essuyage, le corps de connecteur comprenant un dispositif de guidage d'au moins un flux d'air vers une surface à essuyer pour réduire un phénomène d'aspiration de liquide, le corps de connecteur ayant en section une forme sensiblement en U et comportant un premier bras de capot et un deuxième bras de montant reliés ensemble par une paroi longitudinale supérieure, le dispositif de guidage d'au moins un flux d'air comprenant au moins un canal ménagé au niveau de la paroi longitudinale supérieure et s'étendant depuis une entrée positionnée au-dessus du premier bras de capot du corps de connecteur jusqu'à une sortie positionnée au-dessus du deuxième bras de montant du corps de connecteur, le connecteur est caractérisé en ce que le premier bras de capot du corps de connecteur comprend un déflecteur d'air d'entrée prolongeant latéralement le corps de connecteur en regard du premier bras de capot, ledit déflecteur d'air d'entrée formant une surface de guidage d'un flux d'air vers l'entrée du au moins un canal.

Selon une caractéristique de l'invention, le au moins un canal s'étend dans une direction sensiblement transversale au travers la paroi longitudinale supérieure du corps du connecteur entre l'entrée et la sortie.

Selon une caractéristique de l'invention, le deuxième bras de montant comprend un volume de guidage d'au moins un flux d'air apte à guider un flux d'air vers une surface à essuyer, ce volume étant délimité par une première paroi externe et une deuxième paroi interne, la première paroi externe présentant une hauteur supérieure à la deuxième paroi interne, configurée pour récupérer un flux d'air sortant par la sortie du au moins un canal.

Selon une caractéristique de l'invention, le corps de connecteur comprend au moins un déflecteur agencé dans le volume entre la première paroi externe et la deuxième paroi interne.

Selon une caractéristique de l'invention, ledit au moins un déflecteur est apte à orienter un flux d'air sortant dans une direction latérale par rapport au corps de connecteur.

Selon une caractéristique de l'invention, le corps de connecteur comprend plusieurs canaux répartis sur sensiblement toute la longueur du corps de connecteur, notamment un nombre de canaux supérieur ou égal à 6, voire supérieur ou égal à 8, et/ou optionnellement répartis de manière symétrique par rapport à un plan médian transversal vertical.

L'invention porte aussi sur un balai d'essuyage, en particulier de véhicule automobile, comprenant au moins une lame d'essuyage destinée à venir en appui sur une surface à essuyer, au moins un organe de flexion configuré pour générer une courbure du balai d'essuyage, un connecteur tel que décrit précédemment, et au moins un corps principal de support porteur de l'organe de flexion, de la lame d'essuyage et du connecteur.

L'invention porte aussi sur un système d'essuyage pour véhicule automobile configuré pour balayer une surface à essuyer et comprenant un balai d'essuyage et un bras d'entrainement reliés ensemble par un dispositif de connexion, le dispositif de connexion comprenant un connecteur tel que décrit ci-dessus et un adaptateur montés pivotant l'un par rapport à l'autre, le connecteur comprenant un bloc de liaison d'un adaptateur agencé sur la paroi longitudinale supérieure du corps de connecteur.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue d'ensemble d'un système d'essuyage selon un mode de réalisation de l'invention.
La figure 2 représente de façon schématique le système d'essuyage selon le mode de réalisation de l'invention en situation d'essuyage d'un pare-brise d'un véhicule.
La figure 3 est une vue en perspective d'un premier côté d'un dispositif de connexion du système d'essuyage selon le mode de réalisation de l'invention.
La figure 4 est une vue en perspective d'un deuxième côté opposé au premier côté du dispositif de connexion du système d'essuyage selon le mode de réalisation de l'invention.
La figure 5 est une vue en perspective d'un premier côté d'un connecteur du dispositif de connexion du système d'essuyage selon le mode de réalisation de l'invention.
La figure 6 est une vue en perspective de dessus du connecteur du dispositif de connexion du système d'essuyage selon le mode de réalisation de l'invention.
La figure 7 est une autre vue en perspective de dessus du connecteur du dispositif de connexion du système d'essuyage selon le mode de réalisation de l'invention.
La figure 8 est une vue en perspective illustrant un flux d'air entrant au niveau d'un premier côté du dispositif de connexion du système d'essuyage selon le mode de réalisation de l'invention.
La figure 9 est une vue en perspective allégée illustrant le flux d'air entrant au niveau du premier côté du connecteur du dispositif de connexion du système d'essuyage selon le mode de réalisation de l'invention.
La figure 10 est une vue en perspective illustrant un flux d'air sortant au niveau d'un deuxième côté du dispositif de connexion du système d'essuyage selon le mode de réalisation de l'invention.
La figure 11 est une vue en perspective allégée illustrant le flux d'air sortant au niveau du deuxième côté du connecteur du dispositif de connexion du système d'essuyage selon le mode de réalisation de l'invention.

### Description détaillée

Dans la suite de la description, les dénominations longitudinale, transversale et verticale se réfèrent à un système d'essuyage selon l'invention. La direction longitudinale correspond à une direction d'extension longitudinale du système d'essuyage, parallèle à la longueur d'un balai d'essuyage du système d'essuyage. La direction transversale correspond à une direction perpendiculaire à la direction longitudinale, de sorte que les deux directions longitudinale et transversale forment un plan parallèle à un pare-brise (ou plus exactement tangent au pare-brise lorsqu'il n'est pas plan) sur lequel le système d'essuyage est destiné à être positionné. Par convention, ce plan sera qualifié de plan horizontal. La direction verticale correspond à une direction perpendiculaire aux deux directions longitudinale et transversale, et donc au plan horizontal, de sorte qu'elle est perpendiculaire à un pare-brise sur lequel le système d'essuyage est positionné. Un repère orthonormé x, y, z sera utilisé pour respectivement ces trois directions longitudinale, transversale et verticale. Les adjectifs « central » et « latéral » seront utilisés en référence à la direction longitudinale. Les adjectifs « supérieur » ou « haut » et « inférieur » ou « bas » seront utilisés en référence à la direction verticale.

La figure 1 illustre en perspective un système d'essuyage 1 selon un mode de réalisation de l'invention, comprenant un balai d'essuyage 2 et un bras d'entrainement 9, non représenté sur la figure 1 mais visible sur la figure 2, destiné à relier le balai d'essuyage à un moteur d'entrainement. Selon le mode de réalisation, le système d'essuyage 1 est configuré pour être installé sur un véhicule automobile et pour permettre d'évacuer l'eau, un liquide lave-glace et/ou des salissures, présents sur une surface à essuyer 40 telle qu'une surface vitrée, et plus particulièrement un pare-brise de véhicule automobile, comme illustré par la figure 2. Pour cela, le système d'essuyage 1 est apte à effectuer un mouvement de va-et-vient angulaire sur un pare-brise, comme explicité précédemment. Le système d'essuyage 1 comprend de plus un dispositif de connexion 30, apte à relier le balai d'essuyage 2 à un bras d'entraînement 9. Le dispositif de connexion 30 est disposé sensiblement au centre du balai 12 et assure une liaison mécanique amovible entre une partie terminale d'un bras d'entraînement et le balai d'essuyage 2, et permet ainsi de séparer le balai d'essuyage 2 du bras d'entraînement en cas de besoin de son remplacement. Le dispositif de connexion 30 comporte un connecteur 10 rendu solidaire du balai d'essuyage 2, et un adaptateur 31 relié par une liaison pivot 20 au connecteur 10 et configuré pour être lié de façon amovible à la partie terminale du bras d'entraînement 9.

Pour permettre une solidarisation et une désolidarisation de l'adaptateur 31 par rapport à la partie terminale du bras d'entraînement 9, l'adaptateur 31 comprend un organe de verrouillage/déverrouillage (non représenté), qui est mobile entre une position de verrouillage dans laquelle l'adaptateur 31 et la partie terminale sont solidaires l'un de l'autre et une position de déverrouillage dans laquelle l'adaptateur 31 et la partie terminale peuvent être séparés l'un de l'autre.

La figure 2 illustre plus particulièrement le problème technique que l'invention cherche à résoudre. Cette figure illustre ainsi le pare-brise, référencé ici 40, d'un véhicule automobile sur lequel est posé le balai d'essuyage 2. Tel qu'illustré, ce pare-brise 11 est délimité par au moins deux montants 41 du véhicule. Lors de la phase ascendante, le balai d'essuyage 2 racle le pare-brise 40 de sorte à amener l'eau et/ou le liquide lave-glace présents sur ce pare-brise 40 vers l'un des montants 41 du véhicule. Cette eau et/ou ce liquide lave-glace ont alors tendance à s'accumuler dans une zone d'accumulation 42 de liquides située entre le balai d'essuyage 2 dans sa position « haute » et ce montant 41 du véhicule. Lors de la phase descendante du balai d'essuyage 2, un phénomène d'aspiration de ces liquides accumulés par le balai d'essuyage 2 peut se produire, ramenant alors ces liquides dans le champ de vision du conducteur.

Le système d'essuyage selon le mode de réalisation propose une solution qui minimise fortement voire annihile ce phénomène d'aspiration par l'intermédiaire d'un dispositif de guidage d'au moins un flux d'air agencé au niveau du connecteur 10 du balai d'essuyage 2. Le dispositif de guidage d'au moins un flux d'air selon l'invention a pour fonction de diriger au moins un flux d'air circulant sur le pare-brise vers le dispositif de guidage d'au moins un flux d'air, de l'y faire traverser et de le guider en sortie dudit dispositif de guidage vers la zone d'accumulation 42 de liquides au moment de la descente du balai d'essuyage. Ceci dans le but de diminuer, voire inverser les conditions aérodynamiques autrement générées en aval du connecteur par rapport à un sens de circulation du flux d'air le long du connecteur et qui conduisent d'une part à l'accumulation d'eau et/ou de liquide lave-glace entre le balai d'essuyage dans sa position « haute » et l'un des montants délimitant le pare-brise et d'autre part à la ré-aspiration par le balai d'essuyage de ces liquides, ce qui tend à les ramener dans le champ de vision d'un conducteur du véhicule. Ainsi, la visibilité de ce conducteur est optimale à tout moment au cours de l'essuyage.

En remarque, on constate en pratique que le phénomène d'aspiration est particulièrement important en partie centrale du balai d'essuyage 2, au niveau du dispositif de connexion 30, et la solution choisie présente l'avantage de chasser au moyen d'un flux d'air les liquides accumulés au niveau de cette zone la plus critique, permettant ainsi d'apporter comme résultat une nette diminution du phénomène global d'aspiration.

Le système d'essuyage 1 selon le mode de réalisation va maintenant être décrit de manière détaillée. Il comprend donc un balai d'essuyage 2 qui s'étend selon la direction longitudinale, d'axe longitudinal x. Le balai d'essuyage 2 comprend une lame d'essuyage 3, au moins un organe de flexion (non représenté), également appelé vertèbre, et deux embouts d'extrémités 5 respectivement agencés à chacune des extrémités longitudinales du balai d'essuyage 2.

La lame d'essuyage 3 est la pièce du balai d'essuyage 2 en contact direct avec la surface vitrée pour évacuer l'eau et/ou les salissures présentes sur cette dernière. La lame d'essuyage 3 est par exemple une lame souple réalisée en un matériau élastique, tel qu'un polymère, ou un caoutchouc notamment.

L'organe de flexion est configuré pour générer une courbure du balai d'essuyage, et agir élastiquement sur la lame d'essuyage 3 et assurer son maintien en contact avec un pare-brise dans toutes les positions du système d'essuyage 1 et sur toute forme de pare-brise.

Chaque embout d'extrémité 5 est prévu pour maintenir ensemble la lame d'essuyage 3 et l'organe de flexion.

Le balai d'essuyage comprend enfin un corps principal de support porteur de l'organe de flexion et de la lame d'essuyage 3.

De manière optionnelle, le balai d'essuyage peut comprendre au moins un déflecteur d'air 4, porté par le corps principal de support, celui-ci étant configuré pour transformer une pression appliquée par un flux d'air circulant le long de la surface vitrée en une force d'appui du balai d'essuyage 2 contre la surface vitrée du véhicule automobile.

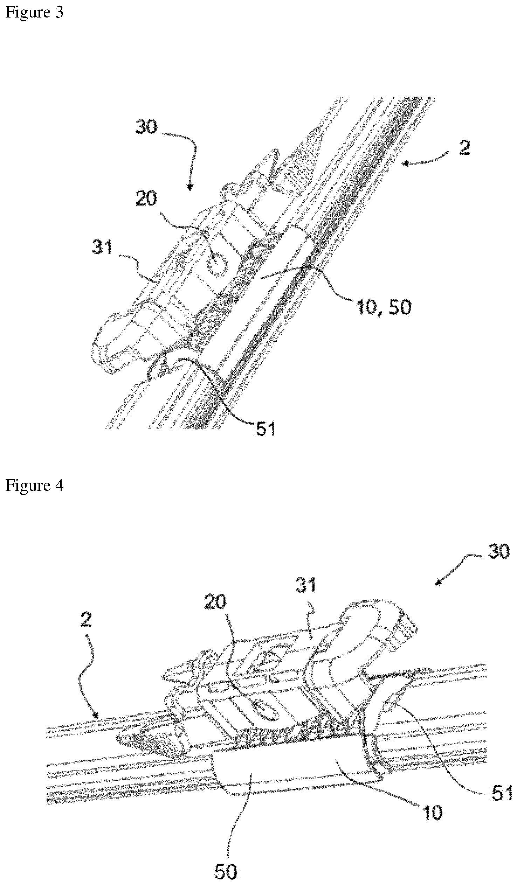

Le corps principal de support porte également le dispositif de connexion 30, comme mentionné précédemment, plus particulièrement visibles sur les figures 3 et 4 sur lesquelles le balai d'essuyage 2 est partiellement tronqué pour faciliter la vue du dispositif de connexion.

Le connecteur 10 du dispositif de connexion 30 comprend un bloc de liaison 21 et un corps de connecteur 50.

Le corps de connecteur 50, est solidarisé au balai d'essuyage 2. De forme allongée, il présente une section transversale en U inversé. Il s'étend en recouvrement de l'organe de flexion du balai d'essuyage 2 et il est prolongé sensiblement verticalement à ses extrémités transversales par un premier bras 11 et un deuxième bras 12 s'étendant vers le balai d'essuyage.

Le corps de connecteur 50 comprend deux glissières 23 longitudinales agencées symétriquement sur les surfaces intérieures des deux bras 11, 12, pour permettre le montage du connecteur 10 sur le corps principal de support du balai d'essuyage 2. Ce corps principal de support du balai d'essuyage s'étend ainsi longitudinalement dans l'espace formé par la forme en U, comme cela apparaît sur la figure 1. Les surfaces intérieures des deux bras 11, 12 remplissent donc une fonction de liaison du corps de connecteur 50 avec le corps principal de support de balai d'essuyage 2.

Le bloc de liaison 21 du connecteur 10 prolonge le corps de connecteur 50 selon la direction verticale V du balai d'essuyage et est destiné à être logé dans l'adaptateur 31.

Le bloc de liaison 21 comprend enfin un orifice 22 s'étendant transversalement par rapport au bloc de liaison 21 et étant destiné à coopérer avec un axe 20 servant de pivot ou bien par la présence d'un plot formé dans l'adaptateur 31 de manière à permettre l'articulation du connecteur par rapport à l'adaptateur. On comprend que la coopération entre le bloc de liaison 21 et l'adaptateur 31 pourrait être réalisée différemment sans que l'on sorte pour autant du contexte de l'invention, et par exemple être réalisée par la présence d'un plot dans le bloc de liaison destiné à coopérer avec un logement approprié formé dans l'adaptateur.

L'adaptateur 31, qui est destiné à être solidaire d'un bras d'entrainement, a une forme telle, qui lui permet de venir en recouvrement du bloc de liaison 21 du connecteur 10. L'axe 20 servant de pivot de l'adaptateur est ménagé sur chacune de ses parois latérales pour coopérer avec l'orifice 22 du bloc de liaison 21 du connecteur, tel qu'évoqué précédemment, de manière à former un axe d'articulation. Ainsi, l'adaptateur 31 est monté sur le connecteur 10 de façon à garder un degré de liberté en pivotement autour de cet axe d'articulation. Ce degré de liberté autorise un pivotement du balai d'essuyage 2 vis-à-vis du bras d'entraînement 9 et permet ainsi au balai d'essuyage 2 de suivre la courbure d'une surface vitrée à essuyer (non représenté) lors de ses déplacements.

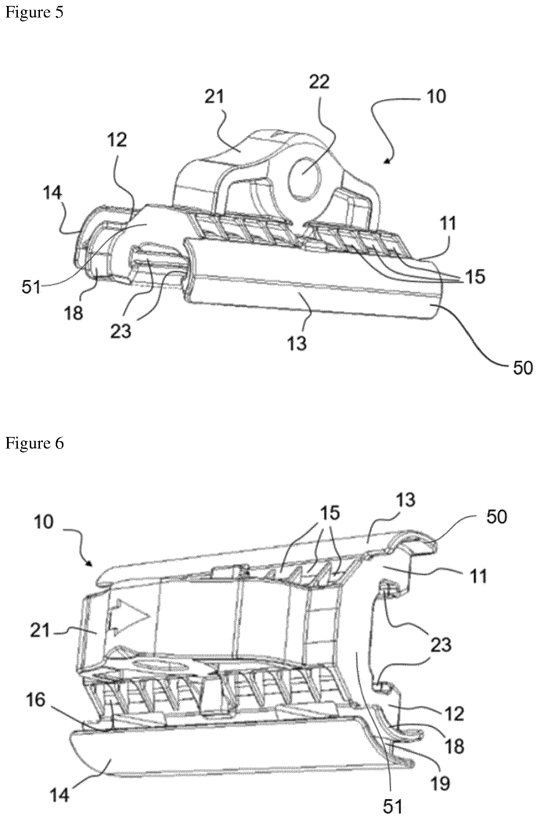

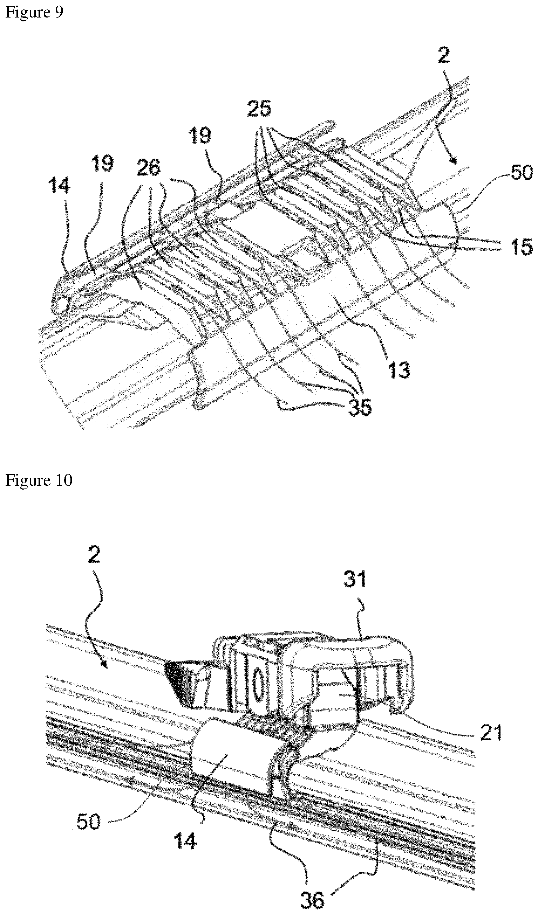

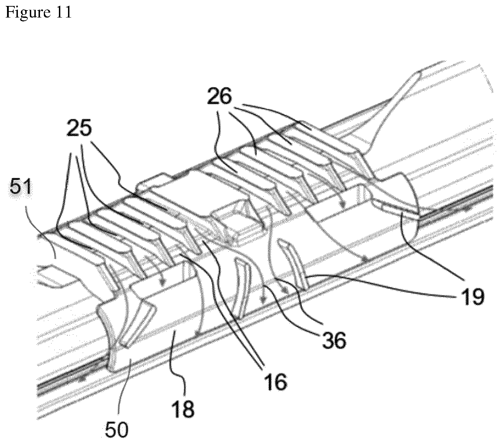

Comme mentionné précédemment, le connecteur 10 intègre un dispositif de réduction du phénomène d'aspiration. Plus particulièrement, le connecteur 10 comprend un corps de connecteur 50 comprenant un dispositif de guidage d'au moins un flux d'air. Le connecteur 10 selon le mode de réalisation est plus particulièrement représenté par les figures 5 à 7. Le corps de connecteur 50 a en section une forme sensiblement en U. Il comporte un premier bras 11 et un deuxième bras 12 reliés ensemble par une paroi longitudinale supérieure 51. Le premier bras 11 s'étendant vers le bas, particulièrement visible sur la perspective de la figure 6, se trouve du côté gauche du balai d'essuyage 2 sur la figure 2, c'est-à-dire orienté vers le pare-brise 40, à l'opposé du montant 41. Dans la position basse du balai d'essuyage, ce premier bras 11 est donc destiné à venir à proximité du capot du véhicule. Pour cette raison, nous utiliserons par convention la dénomination de premier bras 11 du capot du connecteur 10. Un deuxième bras 12 opposé sera dénommé par convention deuxième bras 12 de montant, puisqu'il est orienté face au montant dans la position haute du balai d'essuyage. Selon le mode de réalisation, le corps de connecteur 50 comprend plusieurs canaux 25 ménagés au niveau de la paroi longitudinale supérieure 51 du corps de connecteur 50, plus particulièrement visibles sur les figures 9 et 11, sensiblement symétriquement agencés autour d'un moins un plan médian transversal vertical, qui permettent de guider des flux d'air vers la zone d'accumulation 42.

Plus précisément, le corps de connecteur 50 comprend une surface arrondie convexe en partie extérieure basse de son premier bras 11 de capot, qui s'étend depuis l'extrémité inférieure de ce premier bras 11 jusqu'à des entrées 15 de canaux 25 ménagés dans la paroi longitudinale supérieure du corps de connecteur le long du premier bras 11 de capot. La forme de la surface arrondie permet de guider l'air, circulant sur le pare-brise, à son contact, jusqu'aux entrées 15 de canaux. La surface arrondie forme ainsi un déflecteur d'air d'entrée 13.

Le deuxième bras 12 de montant comprend de même des sorties 16 de canaux, sensiblement alignées avec les entrées 15 dans la direction transversale. En d'autres termes, les sorties 16 de canaux sont ménagées dans la paroi longitudinale 51 du corps de connecteur 50 le long du deuxième bras 12 de montant. Il comprend de plus un agencement permettant de guider l'air sortant des canaux vers le bas, et donc vers le pare-brise 40. Cet agencement comprend une première paroi 14 externe, dont l'extrémité haute est suffisante pour récupérer le flux d'air sortant des canaux par les sorties 16. L'agencement comprend une deuxième paroi 18 interne, s'étendant vers le bas depuis les sorties 16 des canaux. Les deux parois interne et externe 18, 14 sont sensiblement parallèles et délimitent un volume à l'intérieur duquel l'air est guidé vers le pare-brise 40. Ces deux parois 18, 14 sont solidarisées entre elles par des entretoises ou déflecteurs 19, visibles sur les figures 6, 7, 9 et 11. La première paroi 14 externe est plus haute que la deuxième paroi 18 interne.

Le flux d'air sortant des sorties 16 de canaux vient chasser les liquides accumulés dans la zone d'accumulation 42 de liquide de sorte à les évacuer vers le montant 41 du pare-brise hors du pare-brise 11, et ainsi limiter que ce phénomène d'aspiration ne vienne gêner la visibilité du conducteur.

Finalement, il ressort que la paroi longitudinale supérieure 51 du corps de connecteur 50, agencée à la base de la forme en U du corps de connecteur reliant le premier bras 11 de capot au deuxième bras 12 de montant, comprend des canaux 25, plus particulièrement visibles sur les vues partielles des figures 9 et 11. Ces canaux 25 s'étendent dans la direction transversale entre les entrées 15 et les sorties 16, comme mentionné précédemment. Ces canaux 25 sont délimités par des parois verticales et transversales 26 de la paroi longitudinale supérieure 51 du corps de connecteur 50. Ensuite, les parois arrondies 13, 14, 18 permettent de compléter le guidage de flux d'air, en combinaison avec les canaux. Par cette construction, des flux d'air traversent le balai d'essuyage 2 au niveau d'une hauteur minimale par l'intermédiaire du connecteur 10, c'est-à-dire juste au-dessus du corps principal de support du balai d'essuyage, sans modification de ce corps d'essuyage. Cela permet d'optimiser le guidage d'un flux d'air circulant sur le pare-brise 40 vers l'un des montants 41 du pare-brise, puisque l'air suit un parcours au plus proche du balai d'essuyage 2, et donc s'éloigne au minimum du pare-brise 40. Il en résulte aussi finalement que les flux d'air générés traversent le connecteur dans sa direction transversale, et traversent de même un dispositif de connexion 30 d'un système d'essuyage au travers le connecteur, juste en dessous de l'adaptateur 31 qui lui est relié.

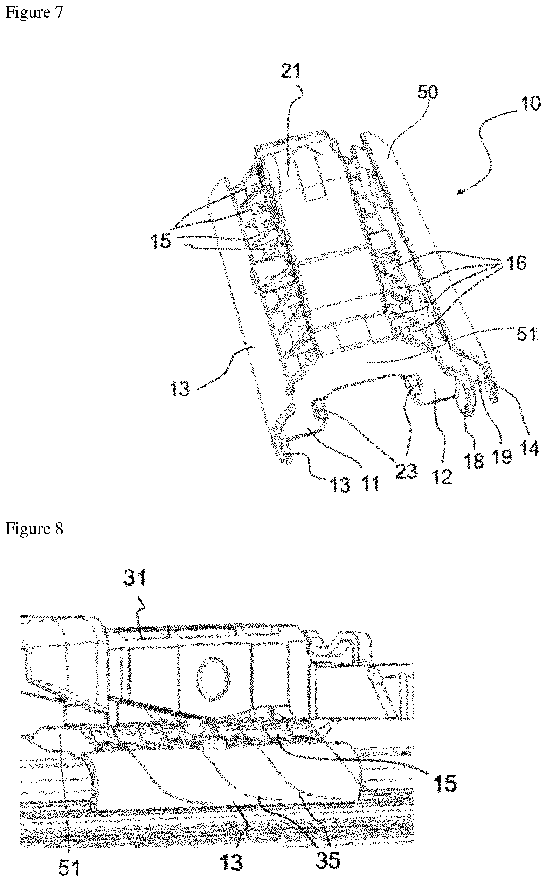

Les figures 8 à 11 illustrent plus particulièrement le fonctionnement du connecteur 10 et du système d'essuyage 1 selon le mode de réalisation de l'invention.

Les figures 8 et 9 illustrent la génération de flux d'air entrants 35 du côté du premier bras 11 de capot du connecteur 10, lors de la descente du balai d'essuyage 2. En effet, lors de cette descente, le déflecteur d'air d'entrée 13 se trouve en partie antérieure du connecteur dans son sens de déplacement, et grâce à sa forme et à sa vitesse de déplacement (celle du balai d'essuyage), il guide l'air vers les entrées 15 des canaux 25, générant ainsi les flux d'air entrants 35, comme illustré sur les deux figures. La figure 9 représente le connecteur 10 en coupe par un plan horizontal au niveau des canaux 25, afin de visualiser plus en détail la trajectoire des flux d'air 35, qui contournent le balai d'essuyage en restant au plus près de ce balai d'essuyage.

Les figures 10 et 11 illustrent les flux d'air sortants 36 du côté du deuxième bras 12 de montant du connecteur 10, lors de la descente du balai d'essuyage 2. Ces flux d'air sortants 36 résultent des flux d'air entrants 35. Ils débouchent des sorties 16 des canaux 25, dans une direction sensiblement transversale, puis sont inclinés vers le bas par les parois 14, 18, afin de chasser les liquides sur le pare-brise, notamment dans la zone d'accumulation 42 de liquides, réduisant ou empêchant ainsi le phénomène d'aspiration. Avantageusement, des déflecteurs 19 permettent une deuxième orientation latérale de certains flux d'air sortants, c'est-à-dire selon une direction à composante longitudinale non nulle, afin de chasser l'air au-delà de la seule longueur du connecteur 10, et finalement agir sur la zone d'accumulation 42 de liquides sur une longueur plus importante que celle du connecteur lui-même.

En d'autres termes, le flux d'air circulant sur le pare-brise, entrant et traversant les canaux 25 du dispositif de guidage d'au moins un flux d'air sort des canaux pour venir ainsi au moins limiter, les conditions aérodynamiques autrement générées en aval du connecteur 10 et pousser l'eau et/ou le liquide lave-glace qui se sont accumulés dans la zone d'accumulation 42 de liquides définie ci-dessus en référence à la figure 2, située entre le balai d'essuyage dans sa position « haute » et le montant 41 du pare-brise. On comprend alors que cette eau et/ou ce liquide lave-glace sont poussés vers le montant 41 du pare-brise, ce qui éloigne ce liquide du balai d'essuyage et réduit ainsi le phénomène d'attraction du balai d'essuyage sur ce liquide. Au final, la visibilité du conducteur est significativement améliorée et le risque de perturbation visuelle est réduit.

Le connecteur 10 selon l'invention présente une forme particulière. Avantageusement, un procédé de fabrication par addition de matière est mis en oeuvre pour le fabriquer.

La présente invention propose ainsi un moyen simple et peu coûteux permettant d'au moins réduire le phénomène d'aspiration qui peut avoir lieu lors des phases descendantes du balai d'essuyage et qui peut résulter en une altération de la visibilité du conducteur. L'invention atteint son objectif en proposant un connecteur comprenant sur son corps de connecteur un dispositif de guidage d'au moins un flux d'air qui est configuré pour repousser ou éloigner un liquide du balai d'essuyage comprenant un tel connecteur.

Naturellement, l'invention ne se limite pas à un connecteur selon le mode de réalisation décrit. En variante, le connecteur peut comprendre tout autre dispositif de guidage d'au moins un flux d'air vers le pare-brise, de sorte à réduire le phénomène d'aspiration explicité précédemment. Ce dispositif de guidage d'un flux d'air peut comprendre un autre nombre de canaux que les huit canaux décrits. Il comprend ainsi au moins un canal, et avantageusement 6 ou plus, voire 8 ou plus. Le ou les canaux sont avantageusement répartis sur sensiblement toute la longueur du connecteur. En variante, il ou ils occupent une partie seulement de cette longueur. D'autre part, le au moins un canal peut présenter une autre orientation que celle décrite. De même, le déflecteur d'air d'entrée 13, et les parois 14, 18, qui forment des déflecteurs d'air de sortie, peuvent présenter d'autres géométries que celles décrites, pour atteindre un effet similaire ou équivalent.

En remarque, le phénomène d'aspiration explicité précédemment augmente quand la vitesse du véhicule augmente. Ce phénomène peut aussi être amplifié lorsque le véhicule se déplace avec le vent de face. La solution selon l'invention présente l'avantage de guider un flux d'air vers le pare-brise, dont le débit augmente quand la vitesse du véhicule augmente et/ou en cas de vent contraire. Ainsi, la solution selon l'invention s'adapte naturellement à l'évolution dynamique du phénomène d'aspiration lorsqu'un véhicule roule, et reste efficace dans toutes les conditions de conduite.

## Revendications

1. Connecteur (10) pour un système d'essuyage (1), en particulier pour véhicule automobile, comprenant un corps de connecteur (50) de forme allongée et configurée pour être monté sur un balai d'essuyage (2), le corps de connecteur (50) comprenant un dispositif de guidage d'au moins un flux d'air vers une surface à essuyer (40) pour réduire un phénomène d'aspiration de liquide, le corps de connecteur (50) ayant en section une forme sensiblement en U et comportant un premier bras (11) de capot et un deuxième bras (12) de montant reliés ensemble par une paroi longitudinale supérieure (51), le dispositif de guidage d'au moins un flux d'air comprenant au moins un canal (25) ménagé au niveau de la paroi longitudinale supérieure (51) et s'étendant depuis une entrée (15) positionnée au-dessus du premier bras (11) de capot du corps de connecteur (50) jusqu'à une sortie (16) positionnée au-dessus du deuxième bras (12) de montant du corps de connecteur (50), le connecteur (10) est **caractérisé en ce que** le premier bras (11) de capot du corps de connecteur (50) comprend un déflecteur d'air d'entrée (13) prolongeant latéralement le corps de connecteur (50) en regard du premier bras (11) de capot, ledit déflecteur d'air d'entrée (13) formant une surface de guidage d'un flux d'air vers l'entrée (15) du au moins un canal (25).

2. Connecteur (10) pour un système d'essuyage (1) selon la revendication précédente, **caractérisé en ce que** le au moins un canal (25) s'étend dans une direction sensiblement transversale au travers la paroi longitudinale supérieure (51) du corps du connecteur (50) entre l'entrée (15) et la sortie (16).

3. Connecteur (10) pour un système d'essuyage (1) selon l'une des revendications précédentes, **caractérisé en ce que** le deuxième bras (12) de montant comprend un volume de guidage d'au moins un flux d'air apte à guider un flux d'air vers une surface à essuyer, ce volume étant délimité par une première paroi (14) externe et une deuxième paroi (18) interne, la première paroi (14) externe présentant une hauteur supérieure à la deuxième paroi (18) interne, configurée pour récupérer un flux d'air sortant par la sortie (16) du au moins un canal (25).

4. Connecteur (10) pour un système d'essuyage (1) selon la revendication précédente, **caractérisé en ce que** le corps de connecteur (50) comprend au moins un déflecteur (19) agencé dans le volume entre la première paroi (14) externe et la deuxième paroi (18) interne.

5. Connecteur (10) pour un système d'essuyage (1) selon la revendication précédente, **caractérisé en ce que** ledit au moins un déflecteur (19) est apte à orienter un flux d'air sortant dans une direction latérale par rapport au corps de connecteur (50).

6. Connecteur (10) pour un système d'essuyage (1) selon l'une des revendications précédentes, **caractérisé en ce que** le corps de connecteur (50) comprend plusieurs canaux (25) répartis sur sensiblement toute la longueur du corps de connecteur (50), notamment un nombre de canaux supérieur ou égal à 6, voire supérieur ou égal à 8, et/ou optionnellement répartis de manière symétrique par rapport à un plan médian transversal vertical.

7. Balai d'essuyage (2) pour un système d'essuyage (1), en particulier de véhicule automobile, comprenant au moins une lame d'essuyage (3) destinée à venir en appui sur une surface à essuyer (40), au moins un organe de flexion configuré pour générer une courbure du balai d'essuyage (2), un connecteur (10) selon l'une quelconque des revendications précédentes, et au moins un corps principal de support porteur de l'organe de flexion, de la lame d'essuyage (3) et du connecteur (10).

8. Système d'essuyage (1) pour véhicule automobile configuré pour balayer une surface à essuyer (40) et comprenant un balai d'essuyage (2) et un bras d'entrainement (9) reliés ensemble par un dispositif de connexion (30), le dispositif de connexion (30) comprenant un connecteur (10) selon l'une des revendications 1 à 6 et un adaptateur (31) montés pivotant l'un par rapport à l'autre, le connecteur (10) comprenant un bloc de liaison (21) d'un adaptateur agencé sur la paroi longitudinale supérieure (51) du corps de connecteur (50).

## Patentansprüche

1. Verbinder (10) für ein Wischersystem (1), insbesondere für ein Kraftfahrzeug, der einen Verbinderkörper (50) von lang gestreckter Form umfasst, der dafür ausgelegt ist, an einem Wischerblatt (2) angebracht zu werden, wobei der Verbinderkörper (50) eine Vorrichtung zur Führung mindestens eines Luftstroms in Richtung einer zu wischenden Fläche (40), um eine Erscheinung der Flüssigkeitsansaugung zu reduzieren, umfasst, wobei der Verbinderkörper (50) einen im Wesentlichen U-förmigen Querschnitt hat und einen haubenartigen ersten Arm (11) und einen aufrechten zweiten Arm (12) aufweist, die durch eine obere Längswand (51) miteinander verbunden sind, wobei die Vorrichtung zur Führung mindestens eines Luftstroms mindestens einen Kanal (25) umfasst, der an der oberen Längswand (51) ausgebildet ist und sich von einem Eingang (15), der oberhalb des haubenartigen ersten Armes (11) des Verbinderkörpers (50) positioniert ist, bis zu einem Ausgang (16), der oberhalb des aufrechten zweiten Armes (12) des Verbinderkörpers (50) positioniert ist, erstreckt, wobei der Verbinder (10) **dadurch gekennzeichnet ist, dass** der haubenartige erste Arm (11) des Verbinderkörpers (50) einen Eingangs-Windabweiser (13) umfasst, der den Verbinderkörper (50) gegenüber dem haubenartigen ersten Arm (11) seitlich verlängert, wobei der Eingangs-Windabweiser (13) eine Fläche zur Führung eines Luftstroms in Richtung des Eingangs (15) des mindestens einen Kanals (25) bildet.

2. Verbinder (10) für ein Wischersystem (1) nach dem vorhergehenden Anspruch, **dadurch gekennzeichnet, dass** sich der mindestens eine Kanal (25) in einer im Wesentlichen quer verlaufenden Richtung durch die obere Längswand (51) des Verbinderkörpers (50) zwischen dem Eingang (15) und dem Ausgang (16) erstreckt.

3. Verbinder (10) für ein Wischersystem (1) nach einem der vorhergehenden Ansprüche, **dadurch gekennzeichnet, dass** der aufrechte zweite Arm (12) ein Volumen zur Führung mindestens eines Luftstroms umfasst, das geeignet ist, einen Luftstrom in Richtung einer zu wischenden Fläche zu lenken, wobei dieses Volumen von einer äußeren ersten Wand (14) und einer inneren zweiten Wand (18) begrenzt wird, wobei die äußere erste Wand (14) eine größere Höhe als die innere zweite Wand (18) aufweist, die dafür ausgelegt ist, einen Luftstrom aufzufangen, der durch den Ausgang (16) des mindestens einen Kanals (25) austritt.

4. Verbinder (10) für ein Wischersystem (1) nach dem vorhergehenden Anspruch, **dadurch gekennzeichnet, dass** der Verbinderkörper (50) mindestens einen Windabweiser (19) umfasst, der in dem Volumen zwischen der äußeren ersten Wand (14) und der inneren zweiten Wand (18) angeordnet ist.

5. Verbinder (10) für ein Wischersystem (1) nach dem vorhergehenden Anspruch, **dadurch gekennzeichnet, dass** der mindestens eine Windabweiser (19) geeignet ist, einen austretenden Luftstrom in eine seitliche Richtung bezüglich des Verbinderkörpers (50) zu lenken.

6. Verbinder (10) für ein Wischersystem (1) nach einem der vorhergehenden Ansprüche, **dadurch gekennzeichnet, dass** der Verbinderkörper (50) mehrere Kanäle (25) aufweist, die im Wesentlichen über die gesamte Länge des Verbinderkörpers (50) verteilt sind, insbesondere eine Anzahl von Kanälen, die größer oder gleich 6 oder sogar größer oder gleich 8 ist, und/oder optional symmetrisch bezüglich einer vertikalen Mittelquerebene verteilt sind.

7. Wischerblatt (2) für ein Wischersystem (1), insbesondere eines Kraftfahrzeugs, welches mindestens einen Wischergummi (3), der dazu bestimmt ist, auf einer zu wischenden Fläche (40) zur Anlage zu kommen, mindestens ein Biegeorgan, das dafür ausgelegt ist, eine Krümmung des Wischerblatts (2) zu erzeugen, einen Verbinder (10) nach einem der vorhergehenden Ansprüche und mindestens einen Hauptstützkörper, der das Biegeorgan, den Wischergummi (3) und den Verbinder (10) trägt, umfasst.

8. Wischersystem (1) für ein Kraftfahrzeug, das dafür ausgelegt ist, über eine zu wischende Fläche (40) zu streichen, und ein Wischerblatt (2) und einen Antriebsarm (9), die durch eine Verbindungsvorrichtung (30) miteinander verbunden sind, umfasst, wobei die Verbindungsvorrichtung (30) einen Verbinder (10) nach einem der Ansprüche 1 bis 6 und einen Adapter (31), die schwenkbar relativ zueinander gelagert sind, umfasst, wobei der Verbinder (10) einen Verbindungsblock (21) eines Adapters umfasst, der auf der oberen Längswand (51) des Verbinderkörpers (50) angeordnet ist.

## Claims

1. A connector (10) for a wiping system (1), in particular for a motor vehicle, comprising a connector body (50) which has an elongated shape and is configured to be mounted on a wiper blade (2), the connector body (50) comprising a device for guiding at least one air flow towards a surface to be wiped (40) in order to reduce a liquid suction phenomenon, the connector body (50) being substantially U-shaped in cross-section and comprises a first hood arm (11) and a second pillar arm (12) connected together by an upper longitudinal wall (51), the device for guiding at least one air flow comprising at least one channel (25) provided at the upper longitudinal wall (51) and extending from an inlet (15) positioned above the first hood arm (11) of the connector body (50) to an outlet (16) positioned above the second pillar arm (12) of the connector body (50), the connector (10) is **characterized in that** the first hood arm (11) of the connector body (50) comprises an inlet air deflector (13) laterally extending the connector body (50) opposite the first hood arm (11), said inlet air deflector (13) forming a surface for guiding an air flow towards the input (15) of at least one channel (25).

2. The connector (10) for a wiping system (1) as claimed in the preceding claim, **characterized in that** the at least one channel (25) extends in a substantially transverse direction through the upper longitudinal wall (51) of the connector body (50) between the inlet (15) and the outlet (16).

3. The connector (10) for a wiping system (1) as claimed in one of the preceding claims, **characterized in that** the second pillar arm (12) comprises a volume for guiding at least one air flow capable of guiding an air flow towards a surface to be wiped, this volume being delimited by a first outer wall (14) and a second inner wall (18), the first outer wall (14) having a height greater than the second inner wall (18), configured to recover an air flow exiting via the outlet (16) of the at least one channel (25).

4. The connector (10) for a wiping system (1) as claimed in the preceding claim, **characterized in that** the connector body (50) comprises at least one deflector (19) arranged in the volume between the first outer wall (14) and the second inner wall (18).

5. The connector (10) for a wiping system (1) as claimed in the preceding claim, **characterized in that** said at least one deflector (19) is able to direct an outgoing air flow in a lateral direction with respect to the connector body (50).

6. The connector (10) for a wiping system (1) as claimed in one of the preceding claims, **characterized in that** the connector body (50) comprises a plurality of channels (25) distributed over substantially the entire length of the connector body (50), in particular a number of channels greater than or equal to 6, or greater than or equal to 8, and/or optionally distributed symmetrically with respect to a vertical transverse median plane.

7. A wiper blade (2) for a wiping system (1), in particular for a motor vehicle, comprising at least one wiper strip (3) intended to bear against a surface to be wiped (40), at least one bending member configured to generate a curvature of the wiper blade (2), a connector (10) as claimed in any one of the preceding claims, and at least one main support body carrying the bending member, the wiper strip (3), and the connector (10).

8. A motor vehicle wiping system (1) configured to wipe a surface to be wiped (40) and comprising a wiper blade (2) and a drive arm (9) connected together by a connection device (30), the connection device (30) comprising a connector (10) as claimed in one of claims 1 to 6 and an adapter (31) mounted pivotably to each other, the connector (10) comprising a connecting block (21) of an adapter arranged on the upper longitudinal wall (51) of the connector body (50)
